# EUROPÄISCHE PATENTSCHRIFT

(11) **EP 3 116 745 B1**
(45) Veröffentlichungstag und Bekanntmachung des Hinweises auf die Patenterteilung: **16.10.2019**
(21) Anmeldenummer: 15712824.0
(22) Anmeldetag: 13.03.2015
(51) Int. Cl.: B60N 2/24, B60N 2/42, B60N 2/427, F16F 9/53

(54) **BAUGRUPPE ZUR ENERGIEABSORPTION BEI EINEM ÜBERLASTEREIGNIS**
ASSEMBLY FOR ABSORBING ENERGY IN THE EVENT OF AN OVERLOAD
ENSEMBLE D'ABSORPTION D'ÉNERGIE LORS D'UN ÉVÉNEMENT DE SURCHARGE

(30) Priorität: 13.03.2014 DE 102014103455
(43) Veröffentlichungstag der Anmeldung: 18.01.2017
(73) Patentinhaber: General Dynamics European Land Systems - Mowag GmbH, 8280 Kreuzlingen (CH)
(72) Erfinder: BATTLOGG, Stefan, A-6771 St. Anton i.M. (AT); PÖSEL, Jürgen, A-6700 Bludenz (AT)
(74) Vertreter: BSB Patentanwälte Schütte & Engelen Partnerschaft mbB
(86) Internationale Anmeldenummer: PCT/EP2015/055372
(87) Internationale Veröffentlichungsnummer: WO 2015/136109

(56) Entgegenhaltungen:
- CN-U- 202 001 547
- DE-A1-102010 020 086
- DE-A1-102012 012 535
- US-A- 4 958 704
- US-A1- 2008 156 602
- US-A1- 2013 025 987

## Beschreibung

Die vorliegende Erfindung betrifft eine Baugruppe zur Energieabsorption bei einem Überlastereignis. Insbesondere betrifft die Erfindung eine Baugruppe, die bei einmalig auftretenden Überlastereignissen zur Vermeidung oder Reduktion von Schäden an Objekten, wie Personen oder Gegenständen dient. Dabei reduziert die Baugruppe die aufgrund eines einmalig auftretenden Energieeintrages resultierende Belastung auf ein an der Baugruppe angeordnetes oder damit gekoppeltes Objekt. Ein solches einmaliges Überlastereignis mit einem Energieeintrag tritt bei einer Explosion einer Mine auf.

Insbesondere wird die erfindungsgemäße Baugruppe an Transportmitteln, wie Truppentransportern, Panzern, Hubschraubern oder dergleichen eingesetzt, um transportierte Personen vor gesundheitsgefährdenden oder sogar lebensbedrohlichen Stößen zu schützen, wenn beispielsweise eine Mine zur Explosion unterhalb des Transportmittels gebracht wird. Systeme zur Energieabsorption bei Explosionen offenbaren unter anderem die US 2008/156602 A1 und die DE 10 2012 012 535 A1.

Im Stand der Technik sind verschiedene Baugruppen bekannt geworden, mit denen eine Energieabsorption möglich ist. Eine variable Impulsenergie würde beim Stand der Technik und einer starren Ankoppelung zu erheblichen Schäden führen. Ein Schaden ist jeder insbesondere dauerhafte Nachteil, den eine Person oder Sache durch ein Ereignis erleidet. Es ist z. B. einem möglich, Stöße über magnetorheologische oder elektrorheologische Fluide zu dämpfen. Bei der Verwendung von magnetorheologischen Fluiden wird beispielsweise ein Dämpfungskanal zwischen zwei Kammern einer Dämpferkammer mit einem Magnetfeld gesteuert beaufschlagt, wobei sich die Dämpfung aus der Stärke des in dem Dämpfungskanal erzeugten Magnetfeldes ergibt. Eingesetzt werden diese Dämpfer zur Dämpfung von Fahrbahnunebenheiten z. B. bei Kraftfahrzeugen unter dem Markennamen MagneRide.

Der Einsatz von magnetorheologischen Fluiden bietet erhebliche Vorteile, da magnetorheologische Fluide innerhalb von einer oder einigen Millisekunden auf eine Feldänderung reagieren. Bei Einsatz eines typischen Dämpfers, bei dem ein an einer Kolbenstange geführter Kolben eine zylindrische Dämpferkammer in eine erste und eine zweite Kammer teilt und bei dem der Dämpfungskanal durch den Kolben führt, können bei Einsatz an einem Minenschutzsitz und bei einer Minenexplosion unterhalb beispielsweise eines Truppentransporters erhebliche Geschwindigkeiten an dem Dämpfer auftreten, wobei die Relativgeschwindigkeit 5 m/sec. oder 10 m/sec. oder noch mehr erreichen oder überschreiten kann.

Obwohl magnetorheologische Fluide innerhalb von einer Millisekunde auf eine Feldänderung reagieren können, erfordern solche Geschwindigkeitsverhältnisse einen extrem langen Kolben, damit das durch den Kolben strömende magnetorheologische Fluid auf ein geändertes Magnetfeld reagiert und die gewünschte Dämpfung erzeugt.

Nachteilig bei einem solchen System ist aber, dass ein solcher und extrem langer Kolben zum einen das Gesamtgewicht des Systems vergrößert. Zum anderen wird durch einen derartig langen Dämpfungskanal auch die Grundkraft erhöht, die auch ohne Anlage eines Magnetfeldes auftritt. Dadurch wird beispielsweise die Rückstellgeschwindigkeit eines solchen Dämpfers verringert.

Zur Verbesserung derartiger Baugruppen ist es möglich, den Strömungsdurchmesser eines Dämpfungskanals entsprechend zu erhöhen, wodurch die Strömungsgeschwindigkeit dementsprechend herabgesetzt wird. Nachteilig an einer solchen Maßnahme ist aber, dass das benötigte Magnetfeld erheblich stärker ist, um in dem vergrößerten Dämpfungsspalt die gewünschte Verkettung der magnetorheologischen Partikel zu erzielen. Dadurch steigt der Strombedarf eines solchen Systems, was nachteilig ist, da oftmals lokal ein Energiespeicher vorgehalten werden muss, da bei einem Überlastereignis eine zentrale Energieversorgung nicht immer sichergestellt werden kann.

Alternativ zur Vergrößerung des Durchmessers des Strömungskanals ist es auch möglich, die Anzahl der Strömungskanäle bei gleichbleibendem Durchmesser auf fünf oder zehn zu vergrößern. Dadurch verteilt sich die Strömung auf mehrere Kanäle, sodass die Strömungsgeschwindigkeit nicht in einem einzelnen Dämpfungskanal entsprechend heraufgesetzt wird. Nachteilig an dieser Lösung ist aber zum einen, dass gegebenenfalls ein größerer Platzbedarf besteht und dass zum anderen die Vielzahl der Dämpfungskanäle mit einem entsprechenden Magnetfeld beaufschlagt werden muss, was wiederum für einen vergrößerten Energiebedarf sorgt.

Es ist deshalb die Aufgabe der vorliegenden Erfindung, eine Baugruppe zur Energieabsorption bei einem einmaligen Überlastereignis zur Verfügung zu stellen, womit eine zuverlässige Energieabsorption mit geringerem Gesamtgewicht und einem relativ geringen Energiebedarf möglich ist. Dabei soll der Energieabsorber bei einem einmaligen Überlastereignis mit einem derart hohen Energieeintrag, bei dem ohne Energieabsorber auftretende Belastungen eine zulässige Grenze überschreiten würden oder ein Schaden an einem mit der Baugruppe gekoppelten oder daran angeordneten Objekt überwiegend wahrscheinlich wäre, Energie absorbieren, um durch die Energieabsorption des Energieabsorbers bei dem Überlastereignis die Belastungen an einem mit der Baugruppe gekoppelten oder daran angeordneten Objekt, wie einer Person oder einer Sache, zu reduzieren.

Diese Aufgabe wird gelöst durch eine Baugruppe mit den Merkmalen des Anspruchs 1. Bevorzugte Weiterbildungen der Erfindung ergeben sich aus den Unteransprüchen.

Weitere Vorteile und Merkmale und Eigenschaften der vorliegenden Erfindung ergeben sich aus der allgemeinen Beschreibung und der Beschreibung der Ausführungsbeispiele.

Die erfindungsgemäße Baugruppe dient insbesondere zur Energieabsorption bei einem Überlastereignis und umfasst wenigstens einen Energieabsorber zur Energieabsorption und Reduktion einer resultierenden Belastung insbesondere an wenigstens einem Teil der Baugruppe oder auf ein mit der Baugruppe gekoppeltes oder koppelbares Objekt. Der Energieabsorber umfasst wenigstens eine daran vorgesehene Befestigungseinrichtung und wenigstens eine daran vorgesehene Halteeinrichtung. Vorzugsweise ist die Befestigungseinrichtung mit einem Ende verbunden und die Halteeinrichtung ist an einem anderen Ende des Energieabsorbers angeordnet bzw. daran befestigt. Der Energieabsorber ist dafür vorgesehen, bei einer Relativbewegung zwischen der Befestigungseinrichtung und der Halteeinrichtung Energie zu absorbieren und insbesondere Energie zu dissipieren oder in Wärme umzuwandeln, insbesondere um die Belastung an einem mit der Baugruppe verbindbaren oder koppelbaren Objekt zu reduzieren. Der Energieabsorber umfasst einen Absorberzylinder und eine Kolbeneinrichtung mit einem Absorberkolben und einer damit verbundenen Kolbenstange. Der Absorberkolben definiert an dem Absorberzylinder wenigstens eine erste Kammer einer Absorberkammer. Die erste Kammer ist wenigstens teilweise mit einem feldempfindlichen Absorberfluid gefüllt. An der Kolbeneinrichtung ist wenigstens ein Absorberventil mit wenigstens einem Absorberkanal vorgesehen oder ausgebildet. Der Absorberkanal erstreckt sich in einer axialen Richtung des Absorberkolbens und insbesondere etwa parallel oder parallel zu einer axialen Richtung des Absorberzylinders. Der Absorberkanal ist einem Feld wenigstens einer elektrischen Spule als Felderzeugungseinrichtung aussetzbar. Dabei ist ein Verhältnis des Außendurchmessers der Kolbenstange zu einem Außendurchmesser des Absorberkolbens größer als 3:5 (bzw. 0,60) und die erste wenigstens teilweise mit dem feldempfindlichen Dämpfungsfluid gefüllte Kammer erstreckt sich in einem Raum und insbesondere Ringraum um die Kolbenstange herum, sodass bei der Relativbewegung der Befestigungseinrichtung und der Halteeinrichtung des Energieabsorbers bei der Energieabsorption bei dem Überlastereignis das feldempfindliche Dämpfungsfluid durch den Dämpfungskanal des Absorberkolbens gedrückt wird.

Die erfindungsgemäße Baugruppe hat viele Vorteile. Ein erheblicher Vorteil der erfindungsgemäßen Baugruppe liegt darin, dass der Außendurchmesser der Kolbenstange mindestens halb so groß wie ein Außendurchmesser des Absorberkolbens ist, sodass der bei einer Absorbierung von Energie auf Zug belastete Absorberkolben nur eine erheblich geringere Fluidmenge des Absorberfluids verdrängt. Da das verdrängte Volumen des Absorberfluids sich aus dem Kolbenhub und der Ringfläche um die Kolbenstange herum berechnet, führt eine dickere Kolbenstange zu einem deutlich kleineren verdrängten Volumen des Absorberfluids.

Die Baugruppe ist für eine einmalige Belastung ausgelegt. Bei einer Explosion oder dergleichen dissipiert bzw. absorbiert die Baugruppe Energie, um die Belastung auf ein Objekt bzw. das gedämpfte Ende der Baugruppe zu verringern.

Der Energieabsorber ist insbesondere dazu geeignet und eingerichtet, bei einem einmaligen Überlastereignis mit einem derart hohen Energieeintrag, bei dem ohne Energieabsorber eine auftretende Belastung an einem Teil der Baugruppe so hoch wäre und/oder ein Schaden an dem Objekt wahrscheinlich oder überwiegend wahrscheinlich oder zu erwarten wäre, Energie zu absorbieren oder umzuwandeln. Durch die Energieabsorption bzw. Dissipation von Energie bzw. Energieumwandlung des Energieabsorbers bei dem Überlastereignis kann die Belastung reduziert werden und ein Schaden an dem gekoppelten Objekt vermieden werden.

Ein Objekt ist mit der Baugruppe gekoppelt, wenn das Objekt z. B. an einer Transportfläche angeordnet, platziert und/oder befestigt ist.

Unter einem sich in einer axialen Richtung des Absorberkolbens erstreckenden Absorberkanal wird ein Absorberkanal verstanden, der sich zwischen einem ersten Ende des Absorberkolbens und dem zweiten Ende des Absorberkolbens etwa gradlinig erstreckt. Der Absorberkanal kann auch insbesondere leicht schräg durch den Absorberkolben verlaufen.

Durch die dickere Kolbenstange wird folglich nicht nur das verdrängte Volumen des Absorberfluids verringert, sondern in entsprechender Weise wird auch die Strömungsgeschwindigkeit des Absorberfluids durch den Absorberkanal im Absorberkolben entsprechend deutlich reduziert, sodass eine Länge des Absorberkolbens verringert werden kann. Dadurch sinkt das Gewicht.

Dabei wird der Außendurchmesser der Kolbenstange bewusst groß gewählt, obwohl der Außendurchmesser aufgrund der auftretenden Belastungen nicht nötig ist.

Die erfindungsgemäße Baugruppe eignet sich für den Einsatz in unterschiedlichsten Anwendungen. Beispielsweise kann die Baugruppe an Transportmitteln wie Panzern, Hubschraubern, Schiffen, Flugzeugen oder auch an Truppentransportern oder PKW eingesetzt werden, um starke Stöße bei z. B. Explosionen und dergleichen zu dämpfen.

In einer vorteilhaften Weiterbildung ist ein Verhältnis des Außendurchmessers der Kolbenstange zu einem Außendurchmesser des Absorberkolbens größer als 2 : 3 und insbesondere größer als 3 : 4 und vorzugsweise größer als 4 : 5. Es sind auch Durchmesserverhältnisse möglich, bei denen der Außendurchmesser der Kolbenstange 9 : 10 des Außendurchmessers des Absorberkolbens oder mehr beträgt. Möglich und bevorzugt sind Werte für ein Verhältnis des Außendurchmessers der Kolbenstange zu einem Außendurchmesser des Absorberkolbens größer 0,60 und insbesondere größer 0,70 und vorzugsweise größer 0,82.

Die Kolbenstange ist dabei vorzugsweise rund oder abgerundet ausgestaltet. Möglich ist es aber auch, dass die Kolbenstange und/oder der Absorberkolben mehreckige und/oder nur teilweise abgerundete Außenflächen aufweisen. In solchen Fällen bezieht sich das vorgenannte Verhältnis auf eine typische Außenabmessung der Kolbenstange bzw. eine entsprechend typische Außenabmessung des Absorberkolbens. Insbesondere werden solche Außenabmessungen des Querschnitts der Kolbenstange und/oder des Absorberkolbens in Verhältnis gesetzt, deren Verhältnis charakteristisch für das Kammervolumen der ersten Kammer der Absorberkammer ist.

In vorteilhaften Weiterbildungen ist der Absorberkanal an dem Absorberkolben vorgesehen und eine Länge des Absorberkolbens ist größer als ein Außendurchmesser des Absorberkolbens. Insbesondere ist der Absorberkanal länger als der Außendurchmesser des Absorberkolbens. Derartige Ausgestaltungen sind vorteilhaft, da sie auch bei sehr großen Relativgeschwindigkeiten dafür sorgen, dass eine ausreichende Dämpfung erfolgen kann. Dadurch, dass der Außendurchmesser der Kolbenstange erfindungsgemäß groß gewählt wird, ist die Länge des Absorberkolbens an sich dennoch erheblich kürzer als bei Einsatz einer normalen und dünnen Kolbenstange, die nach der auftretenden Belastung ausgelegt wird.

Vorzugsweise weist die Kolbenstange einen Hohlraum auf, wobei der Durchmesser des Hohlraums größer ist als eine Wandstärke der den Hohlraum umgebenden Wandung. Insbesondere ist der Hohlraum an der Kolbenstange als wenigstens ein Sackloch ausgeführt. Insbesondere ist ein wenigstens im Wesentlichen koaxiales Sackloch vorgesehen, welches insbesondere an dem dem Absorberkolben gegenüberliegenden Ende offen ausgebildet ist. Ein derartiger Hohlraum bietet bedeutende Vorteile, da zum einen das Gesamtgewicht reduziert wird und zum anderen sich der Hohlraum auch zur Aufnahme weiterer Einheiten und Elemente eignet. So kann beispielsweise an dem oder an einem Hohlraum der Kolbenstange ein Teil der Steuereinrichtung oder die Steuereinrichtung insgesamt vorgesehen sein. Zusätzlich oder statt dessen kann in einem anderen Hohlraum oder und/oder in dem gleichen Hohlraum wenigstens ein Energiespeicher zur Energieversorgung untergebracht werden. Ein Energiespeicher ist in allen Fällen besonders bevorzugt vorgesehen. Die Baugruppe sollte in vielen Ausgestaltungen 24 Stunden, 48 Stunden oder 72 Stunden oder mehr ohne externe Stromversorgung auskommen können. Insbesondere sollte eine typische Einsatzdauer ohne Stromversorgung möglich sein. Als Energiespeicher eignen sich insbesondere Kondensatoren wie z. B. sogenannte Supercabs. Auch der Einsatz eines Akkus ist bevorzugt.

Vorzugsweise ist das Absorberfluid in einem Grund- oder Ruhezustand der Baugruppe in der ersten Kammer in einem Ringraum um die Kolbenstange herum angeordnet.

In vorteilhaften Weiterbildungen teilt der Absorberkolben die Absorberkammer in die erste Kammer und eine zweite Kammer. Dabei ist die zweite Kammer insbesondere wenigstens teilweise mit dem Absorberfluid gefüllt.

Bei einer solchen Ausgestaltung wird das Absorberfluid bei einem Überlastereignis von der ersten Kammer wenigstens teilweise in die zweite Kammer übergeleitet. Anschließend kann das Absorberfluid nach dem Überlastereignis oder nach einem ersten Störereignis des Überlastereignisses wieder in die erste Kammer überführt werden, sodass für ein zweites nachfolgendes Störereignis wieder Absorberfluid in der ersten Kammer vorhanden ist.

Ein einziges Überlastereignis kann mehrere Störereignisse aufweisen. So kann bei einer Minenexplosion unterhalb eines gepanzerten Fahrzeugs dies zunächst in die Luft gehoben werden. Das ist das erste Störereignis. Die auftretenden Beschleunigungen bei dem ersten Störereignis können extrem sein. Anschließend fällt das gepanzerte Fahrzeug wieder auf den Boden zurück. Der Aufprall stellt ein zweites Störereignis des gleichen Überlastereignisses dar.

Möglich ist es aber auch, dass die Absorberkammer nur aus der ersten Kammer besteht und dass auf der ersten Seite des Absorberkolbens die erste Kammer vorgesehen ist, während auf der zweiten Seite des Absorberkolbens keine zweite Kammer oder wenigstens keine nach außen hin dicht abgeschlossene zweite Kammer vorgesehen ist. Auf der zweiten Seite des Absorberkolbens kann auch ein variabler Hohlraum vorgesehen sein, der beispielsweise zur Umgebung hin offen ausgebildet ist. Da die Baugruppe vorzugsweise nicht für eine Vielzahl von Störfällen vorgesehen ist, sondern in der Regel zur 1-, 2- oder 3-maligen Anwendung bei Störfällen vorgesehen ist, muss kein dauerhafter Dämpfungsbetrieb möglich sein. Es reicht aus, wenn bei einer oder gegebenenfalls zwei direkt aufeinanderfolgenden Explosionen eine zuverlässige Energieabsorption erfolgt.

In bevorzugten Weiterbildungen ist ein radialer Abstand des Ringraumes von einer Symmetrieachse des Absorberzylinders größer als eine radiale Entfernung des Absorberkanals von einer Symmetrieachse des Absorberzylinders.

Vorzugsweise ist ein Radius der Kolbenstange größer als eine radiale Entfernung des Absorberkanals von einer Symmetrieachse des Absorberzylinders. Vorzugsweise erstreckt sich von der ersten Kammer ein Strömungskanal zu dem Absorberventil, wobei sich der Strömungskanal wenigstens teilweise radial nach innen hin erstreckt. Das Absorberventil und/oder der Absorberkanal ist dabei vorzugsweise radial weiter innen angeordnet als der Strömungskanal.

In bevorzugten Ausgestaltungen ist an dem Absorberkolben eine elektrische Spule als Felderzeugungseinrichtung angeordnet, wobei sich die Windungen der elektrischen Spule im Wesentlichen um eine Achse quer zu einer Längsachse des Absorberzylinders erstrecken. Das bedeutet insbesondere, dass eine Achse der elektrischen Spule quer zu einer Längsachse der Kolbeneinrichtung ausgerichtet ist. Dadurch lässt sich ein sehr effektives Magnetfeld über einen Großteil der Länge und insbesondere die vollständige Länge des Absorberkanals erzeugen. Die elektrische Spule (Elektrospule) ist vorzugsweise so dimensioniert, dass diese nur für die Dauer eines Überlastereignisses (Ereignis) von z. B. 100ms Dauer funktioniert. Dadurch können die elektrische Spule, die Stromzuführdrähte und andere Bauteile dünner, leichter und kostengünstiger ausgeführt werden. Dadurch wird die Baugruppe bzw. der Aktuator wirtschaftlicher umsetzbar. Bei einer längeren Bestromung würde die elektrische Spule überlastet werden und könnte durchbrennen.

In vorteilhaften Ausgestaltungen ist wenigstens ein Rücklaufkanal vorgesehen, wobei wenigstens ein Rücklaufkanal mit wenigstens einem Einwegventil versehen sein kann. Durch einen solchen Rücklaufkanal kann das Absorberfluid von der zweiten Kammer wieder zur ersten Kammer zurückströmen, wenn ein erstes Ereignis eines Überlastereignisses beendet ist. Der Rücklaufkanal kann auch hubabhängig freigegeben werden.

In vorteilhaften Ausgestaltungen beträgt der Betriebsdruck des Absorberfluids in der ersten Kammer im Ruhezustand kleiner 10 bar und insbesondere kleiner 1,5 bar. Der Betriebsdruck des Absorberfluids in der ersten Kammer kann im Ruhezustand auch gleich dem Umgebungsdruck sein. Der maximal vorgesehene mittlere Betriebsdruck in der ersten Kammer im Dämpfungszustand ist vorzugsweise größer 100 bar und insbesondere größer als 500 bar.

Der Betriebsdruck in der zweiten Kammer im Ruhezustand beträgt vorzugsweise kleiner 10 bar und insbesondere kleiner 1,5 bar und kann auch dem Umgebungsdruck entsprechen. Besonders bevorzugt ist es, dass der Betriebsdruck in der zweiten Kammer im Dämpfungszustand kleiner als im Ruhezustand ist. Das bedeutet, dass im Dämpfungszustand der Betriebsdruck in der zweiten Kammer sinkt. Vorzugsweise liegt im Dämpfungszustand in der zweiten Kammer ein Unterdruck gegenüber dem Umgebungsdruck vor.

Geringe Betriebsdrücke im Ruhezustand von z. B. 2 bar oder 1,5bar oder sogar Umgebungsdruck sind besonders vorteilhaft, da die Dichtungen nur wenig oder sogar gar nicht belastet werden. Ein hoher Betriebsdruck bei einem Überlastereignis kann hingegen konstruktiv berücksichtigt werden. Da das System nicht auf die fortwährende Dämpfung von stärksten Stößen ausgelegt ist, werden die dem hohen Betriebsdruck ausgesetzten Dichtungen im Normalzustand "geschont". Die dichtenden Eigenschaften können dauerhaft gewährleistet werden. Neben einem über Dichtungen abgeschlossenen System ist es auch möglich, die Flüssigkeit in einer Kartusche in dem Energieabsorber bzw. in die Absorberkammer einzubringen, womit ein sicherer, dichter Verschluss der Flüssigkeit gewährleistet ist und das Handling beim Zusammenbau vereinfacht wird. Eine solche Kartusche kann beispielsweise als Folienbeutel, dünnwandiger Metall- oder Kunststoffcontainer oder dergleichen ausgeführt sein und bei einem Überlastereignis automatisch geöffnet werden oder aufplatzen.

In bevorzugten Weiterbildungen sind zwischen der Befestigungseinrichtung und der Halteeinrichtung wenigstens eine Vorspanneinrichtung und/oder wenigstens eine Rückstelleinrichtung vorgesehen, welche insbesondere als Zugfeder wirkt. Dadurch wird für eine automatische Rückstellung der Baugruppe in den Ruhezustand nach dem Auftreten eines Überlastereignisses gesorgt.

In vorteilhaften Ausgestaltungen wird die zweite Kammer durch den Absorberkolben, den Absorberzylinder und einen Abschlussdeckel begrenzt. Dabei kann der Abschlussdeckel die zweite Kammer vollständig abdichten. Der Abschlussdeckel kann aber auch nur dafür sorgen, dass kein Staub oder keine Feuchtigkeit oder dergleichen von außen in die zweite Kammer eintritt, wenn sich die Baugruppe im Ruhezustand befindet.

Besonders bevorzugt weist die Baugruppe in der Absorberkammer kein abgetrenntes oder separates Ausgleichsvolumen für das Volumen der Kolbenstange auf. Das bedeutet, dass beim Ausfahren des Absorberkolbens aus der Absorberkammer heraus ein Unterdruck in der zweiten Kammer entsteht, während beim Einfahren des Absorberkolbens der Innendruck insgesamt steigt.

In vorteilhaften Ausgestaltungen ist wenigstens eine Schereinrichtung vorgesehen, welche eine Relativbewegung zwischen dem Absorberzylinder und der Kolbeneinrichtung erst erlaubt, wenn die Belastung ein Maß erreicht, bei welchem zulässige Scherkräfte der Schereinrichtung überschritten werden und ein Zerstören der Schereinrichtung bewirkt wird. Eine solche Schwereinrichtung umfasst insbesondere wenigstens einen Scherbolzen, welcher bei Überschreiten der vorgesehenen Belastung abschert und dann eine Relativbewegung zwischen dem Absorberzylinder und der Kolbeneinrichtung und somit eine Relativbewegung zwischen der Befestigungseinrichtung und der Halteeinrichtung ermöglicht. Das bedeutet, dass eine Dämpfung erst bei großen Belastungen erfolgt, nämlich, wenn die Grenzbelastung der Schereinrichtung überschritten wurde.

Möglich und bevorzugt ist es auch, dass eine Schereinrichtung vorgesehen ist, welche im normalen Betrieb eine Relativbewegung zwischen dem Absorberzylinder und der Kolbeneinrichtung erlaubt und auf ein vorbestimmtes Ausmaß begrenzt. Eine Relativbewegung zwischen dem Absorberzylinder und der Kolbeneinrichtung über das vorbestimmte Ausmaß hinaus wird erst dann ermöglicht, wenn die Belastung ein Maß erreicht, bei welchem zulässige Scherkräfte der Schereinrichtung überschritten werden und ein Zerstören der Schereinrichtung bewirkt wird. Eine solche Ausgestaltung bietet die Möglichkeit einer Komfortfunktion, bei der im normalen Betrieb geringe Stöße gedämpft werden. Bei Auftreten eines Überlastereignisses wie bei beispielsweise einer Minenexplosion wird die Schereinrichtung bzw. der Scherbolzen der Schereinrichtung abgeschert und es wird eine Energieabsorption bei diesem Überlastereignis ermöglicht. Durch die Begrenzung der Relativbewegung im normalen Betrieb wird sichergestellt, dass ein entsprechender Bewegungshub des Energieabsorber für ein Überlastereignis zur Verfügung steht.

Statt einer Schereinrichtung kann auch ein Bolzen genommen werden, welcher durch einen pyrotechnischen Sprengsatz bewegt wird. Die Auslösung des Sprengsatzes erfolgt durch eine elektrische Steuereinheit. Statt dem pyrotechnischen Sprengsatz können auch spezielle Formgedächtnislegierungen verwendet werden.

In vorteilhaften Weiterbildungen wird in dem Hohlraum der Kolbenstange wenigstens ein Teil der Steuereinrichtung und/oder wenigstens ein Teil des Energiespeichers angeordnet.

Vorzugsweise umfasst die Baugruppe eine Sitzeinrichtung oder wenigstens eine Sitzeinrichtung. Die Halteeinrichtung wird mit der Sitzeinrichtung verbunden und die Befestigungseinrichtung ist mit der Karosserie eines Transportmittels verbindbar. Dadurch kann eine Bewegung der Sitzeinrichtung gedämpft werden.

Insbesondere umfasst die Baugruppe eine Sitzeinrichtung von einem Kraftfahrzeug und wenigstens einen Energieabsorber. Die Sitzeinrichtung weist in allen Fällen vorzugsweise einen Sitzrahmen und wenigstens einen und insbesondere einen oder genau einen Sitz auf. Der Energieabsorber ist zwischen dem Sitz und dem Sitzrahmen angebracht.

Es ist möglich, dass die Sitzeinrichtung über zwei Einheiten befestigt ist, von denen wenigstens eine Einheit den Energieabsorber aufweist. Möglich ist es auch, dass jede Einheit jeweils einen Energieabsorber aufweist. Dabei können beide Einheiten zur Absorption von Stößen in unterschiedlichen Bewegungsrichtungen dienen. Es ist auch möglich, dass beide Einheiten identischen Zwecken dienen. Möglich ist es auch, dass eine Einheit eine Dämpfereinrichtung zur Dämpfung von normalen Stößen im Betrieb umfasst, während die andere Einheit einen Energieabsorber zur Energieabsorption in Störfällen aufweist.

Möglich ist es auch, dass zwei Einheiten verbaut werden. Für z. B. Minenschutzsitze mit zwei Säulen können auch zwei Systeme oder Einheiten verbaut werden. Die Absorberzylinder jeweils mit der Befestigungseinrichtung und der Halteeinrichtung können dann z. B. zylindrisch und ohne wegstehende Arme ausgebildet sein. Es ist auch möglich, die Funktionen auf beide Einheiten zu verteilen. Z. B. kann in einer Säule die Dämpfung und in der anderen Säule die Rückstellung vorgesehen sein. Wenn zwei Einheiten oder Energieabsorber vorgesehen sind, kann jeder Energieabsorber nur die halbe Kraft oder den halben Arbeitsbereich aufweisen. Es ist möglich, dass ein Energieabsorber eine erste Explosion dämpft und ein zweiter dämpft eine zweite Explosion oder den Bodenaufprall nach der ersten Explosion.

Dadurch, dass der Durchmesser der Kolbenstange entsprechend vergrößert wurde, muss nur ein erheblich geringes Volumen durch den Absorberkolben durchtreten. Dadurch werden kleinere Strömungsgeschwindigkeiten bedingt, wodurch die Länge des Absorberkolbens entsprechend verkleinert werden kann. Im Ruhezustand kann das System drucklos gehalten werden oder weist einen relativ geringen Überdruck auf. Bei einem Überlastereignis kann der Innendruck erheblich steigen und auf 400 bar oder 600 bar oder dergleichen ansteigen. Ein solcher Druck liegt allerdings nicht dauerhaft an, sondern nur bei einem Überlastereignis oder Schadensfall, d. h. beispielsweise bei Explosion einer Mine. Da im normalen Betriebszustand nur geringe Drücke auftreten, werden alle Dichtungen nur gering belastet. Dadurch müssen solche Dichtungen nicht ständig gegen einen hohen Überdruck abgedichtet werden, sondern nur für den relativ kurzen Schadensfall. Im Prinzip wird eine Einmaldämpfung zur Verfügung gestellt, bei der einmal, zweimal, dreimal oder viermal eine Energieabsorption erfolgen kann.

Bei einer Minenexplosion können typischerweise zwei aufeinanderfolgende Störereignisse auftreten. Bei einer Minenexplosion können auch gepanzerte Fahrzeuge mit einem erheblichen Gesamtgewicht in die Luft geschleudert werden. Ein erstes Störereignis tritt bei diesem Überlastereignis bei der Explosion auf, wenn das Fahrzeug in die Luft angehoben wird. Dabei sorgt die Baugruppe mit der Sitzeinrichtung dafür, dass eine darauf sitzende Person vor zu großen Belastungen geschützt wird. Anschließend tritt ein zweites Störereignis des Überlastereignisses auf, nämlich dann, wenn das Fahrzeug wieder auf den Boden zurückfällt. Dieses zweite Störereignis weist meist eine erheblich geringere Intensität auf und soll auch entsprechend gedämpft werden.

Ein Vorteil ist auch, dass das radial außen die Kolbenstange umgebende Absorberfluid zur Dämpfung verwendet wird und im Schadensfalle radial von außen in einen radial inneren Bereich fließt, um dort in einem weiter radial innen angeordneten Bereich durch den Absorberkolben und den darin angeordneten Absorberkanal durchzutreten. Zur Erhöhung der Wirksamkeit kann der Absorberkanal durch Zwischenwände oder Fächer in Teilkanäle aufgeteilt sein.

Die Baugruppe insgesamt und/oder wenigstens eine daran vorgesehene Einheit und/oder ein Energieabsorber ist insbesondere dann von großem Nutzen, wenn der Energieabsorber Verfahrgeschwindigkeiten größer als > 5m/sec so beherrscht, dass ein Insasse dabei geringstmögliche Verletzungen hat.

In allen Ausgestaltungen wird die Baugruppe bei einem Überlastereignis insbesondere auf Zug beansprucht.

In allen Ausgestaltungen ist es bevorzugt, dass eine existierende Baugruppe nachgerüstet werden kann. Möglich ist auch die Nachrüstung der Baugruppe.

Das Absorberventil kann einen oder zwei und gegebenenfalls mehr Absorberkanäle aufweisen. Der Magnetkreislauf mit der elektrischen Spule weist vorzugsweise einen Kern aus einem ferromagnetischen Material auf. Insgesamt bildet die Baugruppe einen Energieabsorber bei Störfällen oder schweren Stößen.

Ein einmaliges Überlastereignis mit einem hohen Energieeintrag kann nicht nur bei einer Explosion einer Mine auftreten. Ein solches einmaliges Überlastereignis tritt z. B. auch bei einem Off-Road-Unfall eines Fahrzeuges auf, wenn der Fahrer zum Beispiel die Kontrolle verliert und das Fahrzeug unvorhergesehen und unvorhersehbar z. B. eine Böschung oder dergleichen abstürzt und tiefer auf dem Gelände hart aufprallt. Bei derartigen Unfällen ist die Stärke des Energieeintrags bei dem Überlastereignis nicht aus der Geschwindigkeit des Fahrzeugs ableitbar, sondern hängt von der Fallhöhe ab, die aber nicht aus z. B. der Geschwindigkeit des Fahrzeugs abgeleitet werden kann.

Deshalb ist es mit der vorliegenden Erfindung auch möglich und bevorzugt die Insassen von Kraftfahrzeugen bei sogenannten Run OFF-Road Unfällen, auf welche z. B. in den USA ca. 50% der Verkehrstoten zurückgehen, zu schützen.

Ein Abkommen von Straßenfahrzeugen wie Autos, SUVs, LKWs usw. von der asphaltierten Straße aufgrund von Ablenkung, Müdigkeit und schlechten Witterungsbedingungen in unebenes Gelände tritt besonders häufig auf. Fahrzeuge mit einer Baugruppe nach dieser Erfindung verfügen vorzugsweise über eine Sitzkonstruktion mit einem Sitz und einem Sitzrahmen, bei der der zuvor beschriebene Energieabsorber die insbesondere vertikale bzw. im Wesentlichen vertikal wirkende Aufschlagenergie weitgehend absorbiert. Zur Vorbeugung von gefährlichen Wirbelsäulenverletzungen von Insassen befindet sich deshalb zwischen dem Sitz und dem Sitzrahmen wenigstens ein Energieabsorber, um die vertikalen Kräfte und/oder um die Kräfte parallel zur Sitzrückenlehne und/oder um die Kräfte rechtwinklig zur Sitzfläche abzufedern abzufedern. Solche Kräfte entstehen bei einem harten (wenigstens teilweise vertikalen) Aufprall des Fahrzeugs abseits der Fahrbahn. Bei derartigen Überlastereignissen wirkt die zu absorbierende Aufschlagenergie zu einem erheblichen Teil oder weitgehend oder nahezu vollständig in vertikaler Richtung.

Die Erfindung ist primär nicht dafür vorgesehen, bei einem Frontalzusammenstoß Energie zu absorbieren. Für Frontalzusammenstöße in der Ebene sind bei Kraftfahrzeugen hingegen Knautschzonen oder Airbags des Fahrzeugs vorgesehen.

Die Höhe von vertikal wirkenden Belastungen bei Überlastereignissen und Unfällen beim Abkommen von der Straße oder die Stärke der vertikalen Belastungen bei Minenexplosionen können hingegen nicht aus Parametern vor dem Überlastereignis abgeleitet werden, da sie nicht geschätzt oder gemessen werden können.

Es ist nicht zwingend notwendig, dass ein Sensor erkennt, dass das Fahrzeug von der Fahrbahn abkommt.

In allen Weiterbildungen, Ausführungen und Ausführungsbeispielen kann das mit der Baugruppe koppelbare Objekt mittelbar oder unmittelbar mit der Baugruppe gekoppelt werden. Das Objekt kann und/oder mittelbar oder unmittelbar auf der Baugruppe oder einer damit verbundenen Komponente angeordnet sein oder werden. Es kann eine feste und/oder lösbare Verbindung sein. Oder das Objekt wird auf der Baugruppe oder einer damit verbundenen Komponente platziert und durch Gewichtskraft gehalten.

In allen Fällen kann der Energieabsorber vertikal, horizontal oder auch schräg eingebaut sein. Zur Ableitung vertikaler Kräfte kann entsprechend umgelenkt werden.

Weitere Vorteile und Eigenschaften der vorliegenden Erfindung ergeben sich aus der Beschreibung der Ausführungsbeispiele, die mit Bezug auf die beiliegenden Figuren im Folgenden erläutert werden.

In den Figuren zeigen:
- Fig. 1: eine schematische perspektivische Ansicht einer erfindungsgemäßen Baugruppe;
- Fig. 2: einen Vorderansicht der Baugruppe nach Fig. 1;
- Fig. 3: eine Seitenansicht im Schnitt der Baugruppe nach Fig. 1 im Dämpfungszustand;
- Fig. 4: einen Vorderansicht der Baugruppe nach Fig. 1 im Schnitt im Ruhezustand;
- Fig. 5: ein Fahrzeug mit erfindungsgemäßen Baugruppen zum Schutz der Insassen bei Explosionen;
- Fig. 6: den Bereich des Kolbens der Baugruppe nach Fig. 1 im vergrößerten Schnitt;
- Fig. 7: einen Querschnitt des Kolbens;
- Fig. 8: eine schematische Darstellung einer weiteren Ausführungsform; und
- Fig. 9: eine schematische Darstellung noch einer Ausführungsform.

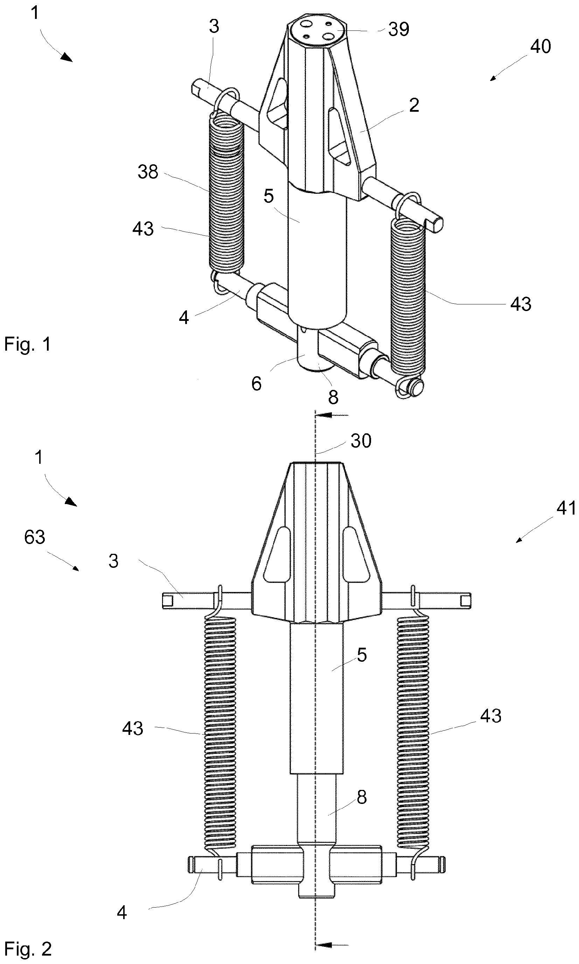

In Fig. 1 ist eine schematische perspektivische Ansicht einer erfindungsgemäßen Baugruppe 1 dargestellt. Die Baugruppe umfasst einen Absorberzylinder an dessen einem Ende eine Befestigungseinrichtung 3 und an dessen anderem Ende eine Halteeinrichtung 4 vorgesehen sind. Die Halteeinrichtung 4 und die Befestigungseinrichtung 3 weisen hier jeweils zwei seitlich abstehende Arme auf, an denen jeweils eine Vorspannfeder 43 einer Vorspanneinrichtung 38 angeordnet ist, um die Baugruppe 1 nach einem Überlastereignis 63 wieder in den Ruhezustand 40 zu überführen, der auch in Figur 1 dargestellt ist.

Die Baugruppe 1 dient zur Energieabsorption bzw. zur Dämpfung von Relativbewegungen zwischen der Befestigungseinrichtung 3 und der Halteeinrichtung 4. Die Halteeinrichtung 4 ist dazu mit der Kolbeneinrichtung 6 des Energieabsorbers 2 verbunden, während die Befestigungseinrichtung 3 fest mit dem Absorberzylinder 5 verbunden ist. Am oberen Ende ist hier ein Abschlussdeckel 39 zu sehen, der die hier im Inneren verborgene zweite Kammer der Absorberkammer 9 nach außen hin abschließt und begrenzt.

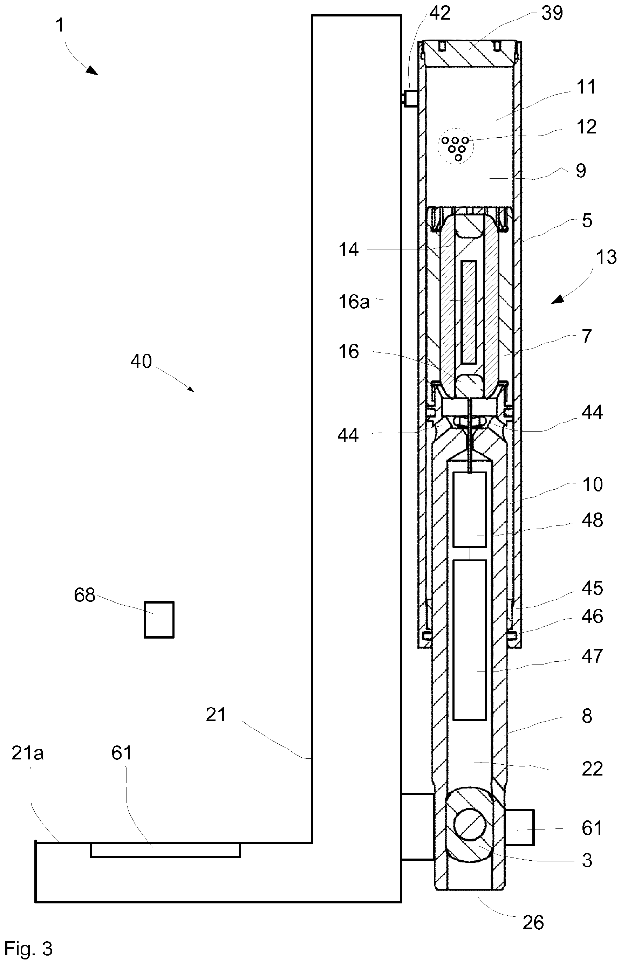

Figur 2 zeigt die Baugruppe 1 in einer Vorderansicht. Durch den Absorberzylinder 5 erstreckt sich zentral eine Symmetrieachse 30, durch welche der Schnitt nach Figur 3 verläuft.

Figur 3 zeigt den Schnitt nach Figur 2 in einem Dämpfungszustand 41 bei einem Überlastereignis 63. Zusätzlich eingezeichnet ist schematisch eine Sitzeinrichtung 21 mit einer Sitzfläche 21a, auf der sich eine Person wie beispielsweise ein Soldat in einem Truppentransporter setzen kann. Dies kann aber auch der schematisch dargestellte Sitz eines Kraftfahrzeuges für den Straßenverkehr sein, wie z. B. der Fahrer- und/oder Beifahrersitz eines PKW.

Im Inneren des Absorberzylinders 5 ist im Schnitt der Absorberkolben 7 und die damit verbundenen Kolbenstange 8 der Kolbeneinrichtung 6 erkennbar. Der Absorberkolben 7 teilt die im Inneren des Absorberzylinders 5 vorhandene Absorberkammer 9 in eine erste Kammer 10 und eine zweite Kammer 11. Die zweite Kammer 11 wird nach außen durch den Abschlussdeckel 39 begrenzt und hier luftdicht abgeschlossen.

Im Ruhezustand ist die erste Kammer 10 wenigstens teileweise und insbesondere vollständig mit Absorberfluid 12 gefüllt. Bei Eintreten eines Überlastereignisses 63 wird die Kolbenstange 8 aus dem Absorberzylinder 5 herausgezogen, sodass das in der ersten Kammer 10 vorhandene Absorberfluid 12 durch den Absorberkanal 14 in dem Absorberkolben 7 durchtritt und in die zweite Kammer 11 übertritt. Die zweite Kammer 11 kann im Ruhezustand schon zu einem gewissen Teil mit dem Absorberfluid 12 gefüllt sein. Es kann aber auch sein, dass die zweite Kammer 11 im Ruhezustand nur wenig oder gar nicht mit Absorberfluid 12 gefüllt ist, sondern nur mit Luft oder einem anderen kompressiblen Gas oder Medium.

Klar erkennbar ist, dass die Kolbenstange 8 einen sehr großen Durchmesser aufweist, sodass für die erste Kammer 10 nur ein relativ schmaler Ringspalt um die Kolbenstange herum verbleibt. Dadurch wird beim Ausfahren des Absorberkolbens 7 nur ein relativ geringes Volumen des Absorberfluids 12 aus der ersten Kammer 10 verdrängt. Deshalb sind die Strömungsgeschwindigkeiten des Absorberfluids 12 in dem Absorberkanal 14 auch bei durch Explosionen hervorgerufenen Störfällen oder Überlastfällen 63 gering, sodass die Länge des Absorberkolbens 7 ausreicht, um durch das Magnetfeld der elektrischen Spule als Felderzeugungseinrichtung 16 die Strömung wie gewünscht zu beeinflussen.

Zusätzlich eingezeichnet ist in Fig. 3 noch ein Dauermagnet 16a, der ein konstantes Magnetfeld für eine Grunddämpfung erzeugt. In Abhängigkeit von den aktuell gewünschten Eigenschaften wird mit der elektrischen Spule 16 das in dem Absorberkanal 14 wirksame Feld moduliert. Dabei kann das Magnetfeld des Dauermagneten 16a durch ein Magnetfeld der elektrischen Spule 16 verstärkt oder abgeschwächt werden. Der Dauermagnet 16a ist hier nur beispielhaft eingezeichnet und kann auch an anderen geeigneten Stellen angeordnet werden.

Bei der Überleitung des Strömungsfluids 12 von der ersten Kammer 10 in die zweite Kammer 11 wird das Absorberfluid 12 durch die sich von außen radial schräg nach innen erstreckenden radialen Strömungsöffnungen 44 nach innen hin umgeleitet. Das bedeutet, dass der Strömungskanal bzw. der Absorberkanal 14 radial weiter innen angeordnet ist als die erste Kammer 10. Dadurch kann das Innere des Absorberkolbens 7 effektiv zur Erzeugung des nötigen Magnetfeldes und für den Absorberkanal 14 verwendet werden.

Die Kolbenstange 8 ist hier erheblich dicker ausgeführt, als es für die Stabilität nötig wäre. Deshalb ist in der Kolbenstange 8 ein Hohlraum 22 vorgesehen, der hier als Sackloch ausgeführt ist. Das Sackloch 22 erstreckt sich von dem dem Kolben gegenüberliegenden Ende 26 aus in die Kolbenstange 8 hinein. Der Hohlraum 22 kann sich bis kurz vor den Absorberkolben 7 hin erstrecken, sodass sich die Länge des Hohlraums 22 über dreiviertel oder mehr der Länge der Kolbenstange 8 bis hin zum Absorberkolben 7 erstreckt. Der Hohlraum 22 kann entsprechend genutzt werden. Hier sind im Inneren des Hohlraums 22 die Steuereinrichtung 48 und ein Energiespeicher 47 angeordnet. Die Steuereinrichtung 48 ist mit der elektrischen Spule 16 verbunden, um diese zu steuern. Des Weiteren ist die Steuereinrichtung 48 mit einer Sensoreinrichtung 61 verbunden, um die Belastungen der Sitzeinrichtung 21 aufzunehmen und zu verarbeiten. Es können auch noch weitere Sensoreinheiten 68 vorgesehen sein. Beispielsweise kann ein Insasse eine Sensoreinheit 68 mit sich führen.

Durch den Energiespeicher 47 wird sichergestellt, dass auch bei einem Stromausfall an Bord des Transportmittels jederzeit die Baugruppe 1 die genügende Energie zur Steuerung des Energieabsorbers 2 bereithält. Der Energiespeicher kann ein Kondensator oder ein Akku sein.

Der Absorberkolben 7 trennt hier nicht nur die erste Kammer 10 von der zweiten Kammer 11, sondern bildet auch ein Strömungsventil 13, welches durch die Steuereinrichtung 48 steuerbar ist.

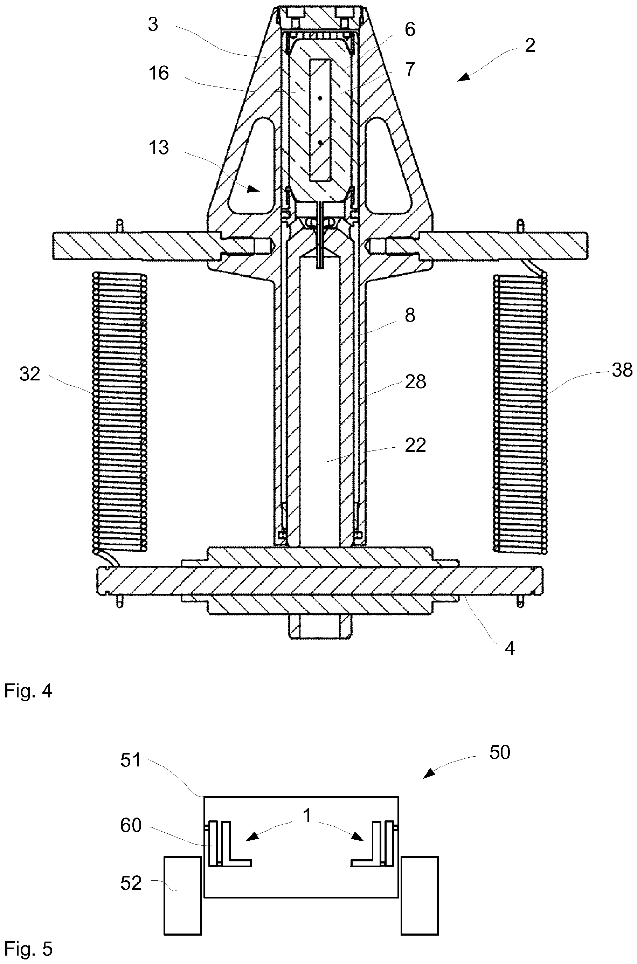

In Figur 4 ist ein weiterer Querschnitt durch die Baugruppe 1 dargestellt, wobei hier auch die Vorspanneinrichtung 38 als Rückstelleinrichtung 43 im Schnitt dargestellt ist. Der Übersichtlichkeit halber wurden der Energiespeicher 47 und die Steuereinrichtung 48 in dem Hohlraum 22 hier nicht dargestellt. Die erste Kammer 10 bildet einen Ringraum 28 um die Kolbenstange 8 herum. Dabei ist eine radiale Erstreckung des Ringraums 28 kleiner als eine Wandstärke der hohlen Kolbenstange 8.

Figur 5 zeigt eine schematische Darstellung eines Transportmittels 50 wie eines Truppentransporters, an dem erfindungsgemäße Baugruppen 1 zum Schutz der Insassen bei Explosionen vorgesehen sind. Das Transportmittel 50 weist eine Karosserie 51 auf, an der Minenschutzsitze 60 als Baugruppen 1 befestigt sind. Das Fahrzeug 50 ist über Räder mit Reifen 52 fahrbar. Bei einem Überlastereignis 63, wie beispielsweise einer Explosion wird das Fahrzeug 50 in die Luft geschleudert, wobei eine gedämpfte Bewegung der Sitzeinrichtung 21 der Baugruppen 1 erfolgt, um die darauf sitzenden Personen vor bleibenden Schäden zu bewahren.

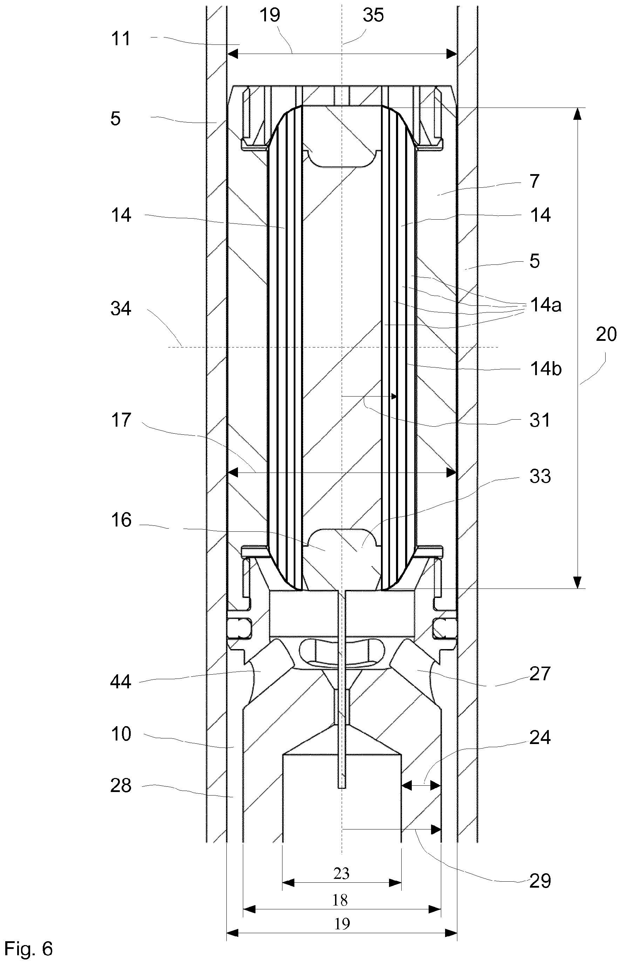

Figur 6 zeigt den Bereich des Kolbens der Baugruppe 1 nach Figur 1 in einem vergrößerten Schnitt, um die Details besser darstellen zu können. Radial außen ist der Absorberzylinder 5 zu sehen, in dessen Innerem hier der Absorberkolben 7 mit der sich daran nach unten anschließenden Kolbenstange 8 angeordnet ist. Oberhalb des Absorberkolbens 7 befindet sich die zweite Kammer 11, während unterhalb des Absorberkolbens 7 die als Ringraum 28 ausgeführte erste Kammer 10 angeordnet ist.

Der Außendurchmesser 18 der Kolbenstange 8 ist hier im Vergleich zu konventionellen Energieabsorbern 2 erheblich vergrößert und beträgt hier mehr als drei viertel des Innendurchmessers 19 des Absorberzylinders 5.

Der Innendurchmesser 19 des Absorberzylinders 5 entspricht praktisch dem Außendurchmesser 17 des Absorberkolbens 7, wobei sich streng genommen der Außendurchmesser 17 des Absorberkolbens 7 geringfügig von dem Innendurchmesser 19 des Absorberzylinders 5 unterscheidet, um ein reibarmes Gleiten des Absorberkolbens 7 innerhalb des Absorberzylinders 5 zu ermöglichen.

Eine Wandstärke 24 der hohl ausgebildeten Kolbenstange ist hier mehr als doppelt so groß wie eine radiale Abmessung des Ringraumes 28 der zweiten Kammer 11.

Ein Innendurchmesser 23 des Hohlraums 22 ist hier vorzugsweise wenigstens halb so groß wie der Innendurchmesser 19 des Absorberzylinders 5. Durch einen großen Hohlraum 22 wird viel Stauraum zur Verfügung gestellt, um dort z. B. die Steuereinrichtung 48 und den Energiespeicher 47 unterzubringen. Außerdem wird Gewicht eingespart.

Die elektrische Spule 16 ist in einem zentrischen Bereich vorgesehen und umfasst eine Mehrzahl von Windungen 33.

Der Absorberkanal 14 kann mehrere Wandungen 14b aufweisen, die eine Fächerstruktur bilden und eine Mehrzahl von Dämpfungsspalten 14a an dem Absorberkanal 14 zur Verfügung stellen. Damit wird die mögliche Dämpfungskraft erhöht. Ein mittlerer radialer Abstand 31 von einer zentralen Längsachse oder Symmetrieachse 38 zu dem Absorberkanal 14 ist hier erheblich kleiner als eine radiale Entfernung oder ein radialer Abstand 29 von der Symmetrieachse 35 zu dem Ringraum 28 der ersten Kammer 10. Radiale Strömungsöffnungen 44 bilden Strömungskanäle 27 die das Absorberfluid 12 von dem Ringraum 28 als zweiter Kammer 11 zudem Absorberkanal 14 überführen.

Die Länge 20 des Absorberkolbens 7 ist größer als ein Außendurchmesser des Absorberkolbens 7. Dadurch wird sichergestellt, dass die Verweilzeit der magnetorheologischen Partikel des Absorberfluids in dem Absorberkanal 14 ausreicht, damit das Magnetfeld 15 der elektrischen Spule 16 das Absorberfluid 12 wie gewünscht beeinflussen kann.

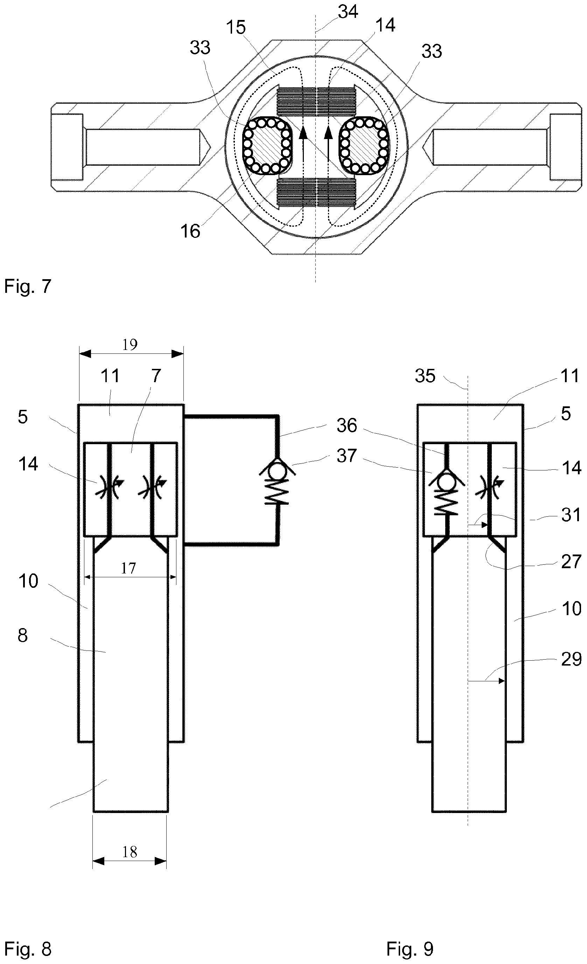

Figur 7 zeigt einen Querschnitt durch die Baugruppe 1, wobei die Querschnittsfläche des Absorberzylinders 5 erkennbar ist. Die elektrische Spule 16 ist im Querschnitt mit ihren einzelnen Windungen 33 dargestellt. Weiterhin ist der Absorberkanal 14 mit den einzelnen Dämpfungsspalten 14a erkennbar. Die Symmetrieachse 34 der elektrischen Spule ist ebenfalls eingezeichnet. Aufgrund des Magnetfeldes 15 ergeben sich die punktiert eingezeichneten Magnetfeldlinien, die die Dämpfungsspalte 14a des Absorberkanals 14 senkrecht oder nahezu senkrecht durchtreten.

Figuren 8 und 9 zeigen schematische Darstellungen der Baugruppe 1, wobei in Figur 8 ein Rücklaufkanal 36 außerhalb des Absorberzylinders 5 vorgesehen ist. Ein Einwegventil 37 sorgt dafür, dass das Absorberfluid 12 nur in eine Richtung strömen kann.

Der Strömungskanal 36 kann vollständig außerhalb des Absorberzylinders verlaufen. Möglich ist es auch, dass der Strömungskanal 36 in einer Innennut des Absorberzylinders 5 vorgesehen ist und in einer vorbestimmten Stellung für einen geöffneten Rücklaufkanal sorgt. Beispielsweise kann kurz vor dem Erreichen der eingefahrenen Hubposition eine Rücklaufverbindung zur Verfügung gestellt werden, durch die das in die zweite Kammer 11 übergetretene Absorberfluid wieder in die erste Kammer 10 zurückfließt.

Möglich ist es aber auch, dass, wie in Figur 9 dargestellt, ein Rücklaufkanal 36 durch den Absorberkolben 7 oder auf der Oberfläche des Absorberkolbens 7 verläuft, der im Normalzustand durch ein entsprechendes Rückschlagventil bzw. Einwegventil 37 verschlossen ist.

Insgesamt stellt die Erfindung eine vorteilhafte Baugruppe 1 zur Verfügung, mit der ein Minenschutzsitz oder der Sitz eines Kraftfahrzeuges ausgerüstet werden kann, um bei Störfällen wie Explosionen oder Run-OFF-Road Unfällen und dergleichen einen zuverlässigen Schutz für Personen zur Verfügung zu stellen, womit die Verletzungswahrscheinlichkeit erheblich abnimmt.

**Bezugszeichenliste:**

| | | | |
|---|---|---|---|
| 1 | Baugruppe | 27 | Strömungskanal |
| 2 | Energieabsorber | 28 | Ringraum |
| 3 | Befestigungseinrichtung | 29 | radialer Abstand |
| 4 | Halteeinrichtung | 30 | Symmetrieachse (von 5, 8) |
| 5 | Absorberzylinder | 31 | radiale Entfernung |
| 6 | Kolbeneinrichtung | 32 | Rückstelleinrichtung |
| 7 | Absorberkolben | 33 | Windung |
| 8 | Kolbenstange | 34 | Achse (von 16) |
| 9 | Absorberkammer | 35 | Längsachse |
| 10 | erste Kammer | 36 | Rücklaufkanal |
| 11 | zweite Kammer | 37 | Einwegventil |
| 12 | Absorberfluid | 38 | Vorspanneinrichtung |
| 13 | Absorberventil | 39 | Abschlussdeckel |
| 14 | Absorberkanal | 40 | Ruhezustand |
| 14a | Dämpfungsspalt | 41 | Dämpfungszustand |
| 14b | Wandung | 42 | Schereinrichtung |
| 15 | Feld | 43 | Vorspannfeder |
| 16 | Felderzeugungseinrichtung, elektrische Spule | 44 | radiale Strömungsöffnung |
| | | 45 | Führungsbuchse |
| 16a | Dauermagnet | 46 | Dichtung |
| 17 | Außendurchmesser (von 7) | 47 | Energiespeicher |
| 18 | Außendurchmesser (von 8) | 48 | Steuereinrichtung |
| 19 | Innendurchmesser (von 5) | 50 | Transportmittel, Fahrzeug |
| 20 | Länge (von 14) | 51 | Karosserie |
| 21 | Sitzeinrichtung | 52 | Reifen |
| 21a | Sitzfläche | 60 | Minenschutzsitz |
| 22 | Hohlraum (in 8) | 61 | Sensoreinrichtung |
| 23 | Durchmesser (von 22) | 63 | Überlastereignis |
| 24 | Wandstärke (von 8) | 68 | Sensoreinheit |
| 25 | Wandung | | |
| 26 | Ende | | |

## Patentansprüche

1. Baugruppe (1) mit einem Energieabsorber (2) zur Energieabsorption bei einem Überlastereignis, um eine resultierende Belastung auf ein mit der Baugruppe (1) gekoppeltes Objekt zu reduzieren,
wobei der Energieabsorber (2) eingerichtet und geeignet ist, bei einem einmaligen Überlastereignis mit einem derart hohen Energieeintrag, bei dem ohne Energieabsorber ein Schaden an dem Objekt überwiegend wahrscheinlich wäre, Energie zu absorbieren, um durch die Energieabsorption des Energieabsorbers (2) bei dem Überlastereignis eine Überbelastung an dem Objekt zu vermeiden,
wobei der Energieabsorber (2) eine daran vorgesehene Befestigungseinrichtung (3) und eine an dem Energieabsorber (2) vorgesehene Halteeinrichtung (4) aufweist, wobei der Energieabsorber (2) dafür vorgesehen ist, bei einer Relativbewegung zwischen der Befestigungseinrichtung (3) und der Halteeinrichtung (4) Energie zu absorbieren,
wobei der Energieabsorber (2) einen Absorberzylinder (5) und eine Kolbeneinrichtung (6) mit einem Absorberkolben (7) und einer damit verbundenen Kolbenstange (8) umfasst, wobei der Absorberkolben (7) an dem Absorberzylinder (5) wenigstens eine erste Kammer (10) einer Absorberkammer (9) definiert,
wobei die erste Kammer (10) wenigstens teilweise mit einem feldempfindlichen Absorberfluid (12) gefüllt ist,
und wobei an der Kolbeneinrichtung (6) wenigstens ein Absorberventil (13) mit wenigstens einem sich in einer axialen Richtung erstreckenden Absorberkanal (14) vorgesehen ist, welcher einem Feld (15) der Felderzeugungseinrichtung (16) aussetzbar ist,
**dadurch gekennzeichnet,**
**dass** ein Verhältnis des Außendurchmessers (18) der Kolbenstange (8) zu einem Außendurchmesser (17) des Absorberkolbens (7) größer als 3:5 ist und sich die erste wenigstens teilweise mit dem feldempfindlichen Absorberfluid (12) gefüllte Kammer (10) in einem Raum (28) um die Kolbenstange (8) herum erstreckt, sodass bei der Relativbewegung der Befestigungseinrichtung (3) und der Halteeinrichtung (4) des Energieabsorbers (2) bei der Energieabsorption bei dem Überlastereignis das feldempfindliche Absorberfluid (12) durch den Dämpfungskanal des Absorberkolbens (7) gedrückt wird.

2. Baugruppe (1) nach dem vorhergehenden Anspruch, wobei ein Verhältnis des Außendurchmessers (18) der Kolbenstange (8) zu einem Außendurchmesser (17) des Absorberkolbens (7) größer als 2:3 oder größer als 3:4 oder größer 4:5 beträgt.

3. Baugruppe (1) nach einem der vorhergehenden Ansprüche, wobei der Absorberkanal (14) an dem Absorberkolben (7) vorgesehen ist und wobei eine Länge des Absorberkolbens (7) größer als ein Außendurchmesser (17) des Absorberkolbens (7) ist.

4. Baugruppe (1) nach einem der vorhergehenden Ansprüche, wobei die Kolbenstange (8) einen Hohlraum (22) aufweist, wobei ein Durchmesser (23) des Hohlraums (22) größer ist als eine Wandstärke (24) der den Hohlraum (22) umgebenden Wandung (25) und wobei in dem Hohlraum der Kolbenstange vorzugsweise wenigstens ein Teil der Steuereinrichtung (48) und/oder wenigstens ein Energiespeicher (47) angeordnet ist.

5. Baugruppe (1) nach einem der vorhergehenden Ansprüche, wobei der Absorberkolben (7) die Absorberkammer in die erste Kammer und eine zweite Kammer teilt und wobei die zweite Kammer (11) wenigstens teilweise mit dem Absorberfluid (12) gefüllt ist und wobei die zweite Kammer (11) vorzugsweise durch den Absorberkolben (7), den Absorberzylinder (5) und einen Abschlussdeckel (39) begrenzt wird.

6. Baugruppe (1) nach einem der vorhergehenden Ansprüche, wobei ein radialer Abstand (29) des Ringraums (28) von einer Symmetrieachse (30) des Absorberzylinders (5) größer ist als eine radiale Entfernung (31) des Absorberkanals (14) von einer Symmetrieachse (30) des Absorberzylinders und/oder wobei ein Radius der Kolbenstange (8) größer als eine radiale Entfernung (31) des Absorberkanals (14)von einer Symmetrieachse (30) des Absorberzylinders (5) ist und/oder wobei sich von der ersten Kammer (10) ein Strömungskanal (27) zu dem Absorberventil (13) erstreckt, welcher Strömungskanal (27) sich wenigstens teilweise radial nach innen hin erstreckt.

7. Baugruppe (1) nach einem der vorhergehenden Ansprüche, wobei an dem Dämpferkolben (7) eine elektrische Spule (16) als Felderzeugungseinrichtung (16) angeordnet ist, deren Windungen (33) sich im Wesentlichen um eine Achse (34) quer zu einer Längsachse (35) des Dämpferzylinders (5) erstrecken.

8. Baugruppe (1) nach einem der vorhergehenden Ansprüche, wobei ein Rücklaufkanal (36) vorgesehen ist, welcher mit wenigstens einem Einwegventil (37) versehen ist und/oder wobei ein Rücklaufkanal (36) vorgesehen ist, der hubabhängig freigegeben wird.

9. Baugruppe (1) nach einem der vorhergehenden Ansprüche, wobei der Betriebsdruck des Absorberfluids (12) in der ersten Kammer (10) im Ruhezustand (40) kleiner 10 bar und insbesondere kleiner 1,5 bar beträgt, und wobei der maximal vorgesehene mittlere Betriebsdruck in der ersten Kammer (10) im Dämpfungszustand (41) größer 100 bar und insbesondere größer 500 bar beträgt und/oder wobei der Betriebsdruck in der zweiten Kammer (11) im Ruhezustand (40) kleiner 10 bar und insbesondere kleiner 1,5 bar beträgt, und dass der Betriebsdruck in der zweiten Kammer (11) im Dämpfungszustand (41) kleiner als in dem Ruhezustand ist.

10. Baugruppe (1) nach einem der vorhergehenden Ansprüche, wobei zwei Einheiten vorgesehen sind und jede Einheit jeweils einen Energieabsorber (2) aufweist und wobei die beiden Einheiten vorzugsweise zur Absorption von Stößen in unterschiedliche Bewegungsrichtungen dienen.

11. Baugruppe (1) nach einem der vorhergehenden Ansprüche, wobei zwischen der Befestigungseinrichtung (3) und der Halteeinrichtung (4) wenigstens eine Vorspanneinrichtung (38) und/oder wenigstens eine Rückstelleinrichtung (32) vorgesehen ist, welche insbesondere als Zugfeder wirkt.

12. Baugruppe (1) nach einem der vorhergehenden Ansprüche, wobei wenigstens eine Schereinrichtung (42), welche eine Relativbewegung zwischen dem Absorberzylinder (5) und der Kolbeneinrichtung (6) über einem vorbestimmten Ausmaß erst erlaubt, wenn die Belastung ein Maß erreicht, bei welchem zulässige Scherkräfte der Schereinrichtung (42) überschritten werden und ein Zerstören der Schereinrichtung (42) bewirkt wird.

13. Baugruppe (1) nach einem der vorhergehenden Ansprüche, umfassend eine Sitzeinrichtung (21), wobei die Halteeinrichtung (4) mit der Sitzeinrichtung (21) verbunden ist und wobei die Befestigungseinrichtung (3) mit der Karosserie (51) eines Transportmittel (50) verbindbar ist.

14. Baugruppe (1) nach dem vorhergehenden Anspruch, wobei die Sitzeinrichtung (21) über zwei Einheiten befestigt ist, von denen wenigstens eine Einheit den Energieabsorber (2) aufweist.

## Claims

1. Assembly (1) with an energy absorber (2) for energy absorption in an overload event to reduce a resulting load on an object coupled with the assembly (1),
wherein the energy absorber (2) is set up and suitable, in a single overload event involving energy input that is so high that absent such an energy absorber damage to the object is highly probable, to absorb energy so as to avoid excessive load on the object in the overload event by way of the energy absorption of the energy absorber (2),
wherein the energy absorber (2) comprises a fastener (3) provided thereat and a holding device (4) provided on the energy absorber (2), which energy absorber (2) is provided to absorb energy in a relative motion between the fastener (3) and the holding device (4),
wherein the energy absorber (2) comprises an absorber cylinder (5) and a piston device (6) with an absorber piston (7) and a piston rod (8) connected therewith, wherein the absorber piston (7) on the absorber cylinder (5) defines at least one first chamber (10) of an absorber chamber (9), wherein the first chamber (10) is at least partially filled with a field-sensitive absorber fluid (12),
and wherein at least one absorber valve (13) with at least one absorber duct (14) extending in an axial direction is provided on the piston device (6) which absorber duct can be exposed to a field (15) of the field generating device (16),
**characterised in**
**that** a ratio of the outer diameter (18) of the piston rod (8) to an outer diameter (17) of the absorber piston (7) is larger than 3:5 and the first chamber (10) that is at least partially filled with the field-sensitive absorber fluid (12) extends in a space (28) around the piston rod (8) so that during the relative motion of the fastener (3) and of the holding device (4) of the energy absorber (2) during the energy absorption in the overload event the field-sensitive absorber fluid (12) is urged through the damping duct of the absorber piston (7).

2. The assembly (1) according to the preceding claim wherein a ratio of the outer diameter (18) of the piston rod (8) to an outer diameter (17) of the absorber piston (7) is larger than 2:3 or larger than 3:4 or larger than 4:5.

3. The assembly (1) according to any of the preceding claims wherein the absorber duct (14) is provided on the absorber piston (7) and wherein a length of the absorber piston (7) is larger than an outer diameter (17) of the absorber piston (7).

4. The assembly (1) according to any of the preceding claims wherein the piston rod (8) comprises a hollow space (22) wherein a diameter (23) of the hollow space (22) is larger than a wall thickness (24) of the wall (25) surrounding the hollow space (22) and wherein preferably at least part of the control device (48) and/or at least one energy storage device (47) is disposed in the hollow space of the piston rod.

5. The assembly (1) according to any of the preceding claims wherein the absorber piston (7) subdivides the absorber chamber in the first chamber and a second chamber and wherein the second chamber (11) is at least partially filled with the absorber fluid (12) and wherein the second chamber (11) is preferably defined by the absorber piston (7), the absorber cylinder (5) and an end cover (39).

6. The assembly (1) according to any of the preceding claims wherein a radial clearance (29) between the annular chamber (28) and an axis of symmetry (30) of the absorber cylinder (5) is larger than a radial distance (31) of the absorber duct (14) from an axis of symmetry (30) of the absorber cylinder and/or wherein a radius of the piston rod (8) is larger than a radial distance (31) of the absorber duct (14) from an axis of symmetry (30) of the absorber cylinder (5) and/or wherein a flow duct (27) extends from the first chamber (10) to the absorber valve (13) which flow duct (27) at least partially extends radially inwardly.

7. The assembly (1) according to any of the preceding claims wherein an electric coil (16) acting as the field generating device (16) is disposed on the damper piston (7) wherein the windings (33) of the coil extend substantially around an axis (34) transverse to a longitudinal axis (35) of the damper cylinder (5).

8. The assembly (1) according to any of the preceding claims wherein a reflux duct (36) is provided which is equipped with at least one one-way valve (37) and/or wherein a reflux duct (36) is provided that is released in dependence on the stroke.

9. The assembly (1) according to any of the preceding claims wherein the operating pressure of the absorber fluid (12) in the first chamber (10) in the idle state (40) is less than 10 bar and in particular less than 1.5 bar and wherein the maximum mean operating pressure provided in the first chamber (10) in the damping state (41) is larger than 100 bar and in particular larger than 500 bar and/or wherein the operating pressure in the second chamber (11) in the idle state (40) is less than 10 bar and in particular less than 1.5 bar and that the operating pressure in the second chamber (11) in the damping state (41) is less than in the idle state.

10. The assembly (1) according to any of the preceding claims wherein two units are provided and each of the units comprises one energy absorber (2) and wherein both units may preferably serve to absorb shocks in various movement directions.

11. The assembly (1) according to any of the preceding claims wherein at least one biasing device (38) and/or at least one resetting device (32) which in particular acts as an extension spring is provided between the fastener (3) and the holding device (4).

12. The assembly (1) according to any of the preceding claims wherein at least one shearing device (42) is provided which allows a relative motion between the absorber cylinder (5) and the piston device (6) to exceed a predetermined range only as the load reaches a level where permissible shearing forces of the shearing device (42) are exceeded and destruction of the shearing device (42) is caused.

13. The assembly (1) according to any of the preceding claims comprising a seat device (21) with the holding device (4) connected with the seat device (21) and wherein the fastener (3) can be connected with the body (51) of a transporter (50).

14. The assembly (1) according to the preceding claim wherein the seat device (21) is fastened by way of two units at least one of which units comprises the energy absorber (2).

## Revendications

1. Ensemble (1) comprenant un absorbeur d'énergie (2) destiné à l'absorption d'énergie lors d'un événement de surcharge afin de réduire une charge résultante sur un objet couplé à l'ensemble (1),
dans lequel ledit absorbeur d'énergie (2) est conçu pour et apte à absorber de l'énergie dans un événement de surcharge unique avec un apport d'énergie tellement important, dans lequel un dommage sur l'objet serait pour la plupart probable sans un absorbeur d'énergie, afin d'éviter une surcharge sur l'objet par l'absorption d'énergie de l'absorbeur d'énergie (2) dans le cas de l'événement de surcharge,
dans lequel l'absorbeur d'énergie (2) comprend un dispositif de fixation (3) y prévu ainsi qu'un dispositif de maintien (4) prévu sur l'absorbeur d'énergie (2), l'absorbeur d'énergie (2) étant prévu pour absorber de l'énergie lors d'un mouvement relatif entre le dispositif de fixation (3) et le dispositif de maintien (4), dans lequel l'absorbeur d'énergie (2) comprend un cylindre absorbeur (5) et un dispositif à piston (6) ayant un piston absorbeur (7) et une tige de piston (8) reliée à ce dernier, dans lequel le piston absorbeur (7) sur le cylindre absorbeur (5) définit au moins une première chambre (10) d'une chambre d'absorbeur (9), dans lequel ladite première chambre (10) est remplie au moins en partie d'un fluide absorbeur (12) sensible au champ,
et dans lequel au moins une soupape d'absorbeur (13) ayant au moins un canal d'absorbeur (14) s'étendant dans une direction axiale et qui peut être exposé à un champ (15) du dispositif générateur de champ (16) est prévue sur le dispositif à piston (6),
**caractérisé par le fait**
**qu'**un rapport du diamètre extérieur (18) de la tige de piston (8) à un diamètre extérieur (17) du piston absorbeur (7) est supérieur à 3 : 5 et que la première chambre (10) remplie au moins en partie du fluide absorbeur (12) sensible au champ s'étend dans un espace (28) autour de la tige de piston (8) de sorte que, lors du mouvement relatif du dispositif de fixation (3) et du dispositif de maintien (4) de l'absorbeur d'énergie (2) au moment de l'absorption d'énergie lors de l'événement de surcharge, le fluide absorbeur (12) sensible au champ est pressé à travers le canal d'amortissement du piston absorbeur (7).

2. Ensemble (1) selon la revendication précédente, dans lequel un rapport du diamètre extérieur (18) de la tige de piston (8) à un diamètre extérieur (17) du piston absorbeur (7) est supérieur à 2 : 3 ou supérieur à 3 : 4 ou supérieur à 4 : 5.

3. Ensemble (1) selon l'une quelconque des revendications précédentes, dans lequel ledit canal absorbeur (14) est prévu sur le piston absorbeur (7) et dans lequel une longueur du piston absorbeur (7) est supérieure à un diamètre extérieur (17) du piston absorbeur (7).

4. Ensemble (1) selon l'une quelconque des revendications précédentes, dans lequel la tige de piston (8) présente une cavité (22), dans lequel un diamètre (23) de la cavité (22) est supérieur à une épaisseur de paroi (24) de la paroi (25) entourant la cavité (22), et dans la cavité de la tige de piston étant disposé(e) de préférence au moins une partie du dispositif de commande (48) et/ou au moins un accumulateur d'énergie (47).

5. Ensemble (1) selon l'une quelconque des revendications précédentes, dans lequel le piston absorbeur (7) divise la chambre d'absorbeur en ladite première chambre et une deuxième chambre, et dans lequel la deuxième chambre (11) est remplie au moins en partie du fluide absorbeur (12), et dans lequel la deuxième chambre (11) est délimitée de préférence par le piston absorbeur (7), le cylindre absorbeur (5) et un couvercle de recouvrement (39).

6. Ensemble (1) selon l'une quelconque des revendications précédentes, dans lequel une distance radiale (29) séparant l'espace annulaire (28) d'un axe de symétrie (30) du cylindre absorbeur (5) est supérieure à une distance radiale (31) séparant le canal absorbeur (14) d'un axe de symétrie (30) du cylindre absorbeur, et/ou dans lequel un rayon de la tige de piston (8) est supérieur à une distance radiale (31) séparant le canal absorbeur (14) d'un axe de symétrie (30) du cylindre absorbeur (5), et/ou dans lequel un canal d'écoulement (27) s'étend à partir de la première chambre (10) jusqu'à la soupape d'absorbeur (13), lequel canal d'écoulement (27) s'étend au moins en partie radialement vers l'intérieur.

7. Ensemble (1) selon l'une quelconque des revendications précédentes, dans lequel sur le piston amortisseur (7) est agencée une bobine électrique (16) en tant que dispositif générateur de champ (16), dont les spires (33) s'étendent pour l'essentiel autour d'un axe (34) transversalement à un axe longitudinal (35) du cylindre amortisseur (5).

8. Ensemble (1) selon l'une quelconque des revendications précédentes, dans lequel un canal de retour (36) est prévu qui est pourvu d'au moins une vanne à voie unique (37), et/ou dans lequel un canal de retour (36) est prévu qui est libéré en fonction de la course.

9. Ensemble (1) selon l'une quelconque des revendications précédentes, dans lequel la pression de service du fluide absorbeur (12) dans la première chambre (10) à l'état de repos (40) est inférieure à 10 bars et en particulier inférieure à 1,5 bars, et dans lequel la pression de service moyenne prévue au maximum dans la première chambre (10) à l'état d'amortissement (41) est supérieure à 100 bars et en particulier supérieure à 500 bars, et/ou dans lequel la pression de service dans la deuxième chambre (11) à l'état de repos (40) est inférieure à 10 bars et en particulier inférieure à 1,5 bars, et que la pression de service dans la deuxième chambre (11) à l'état d'amortissement (41) est inférieure à celle à l'état de repos.

10. Ensemble (1) selon l'une quelconque des revendications précédentes, dans lequel deux unités sont prévues et chaque unité présente chacune un absorbeur d'énergie (2), et dans lequel les deux unités servent de préférence à absorber des chocs dans des directions de mouvement différentes.

11. Ensemble (1) selon l'une quelconque des revendications précédentes, dans lequel au moins un dispositif de précontrainte (38) et/ou au moins un dispositif de rappel (32) qui agit en particulier en tant que ressort de traction est/sont prévu(s) entre le dispositif de fixation (3) et le dispositif de maintien (4).

12. Ensemble (1) selon l'une quelconque des revendications précédentes, dans lequel au moins un dispositif de cisaillement (42) qui ne permet un mouvement relatif entre le cylindre absorbeur (5) et le dispositif à piston (6) au-dessus d'un degré prédéterminé que lorsque la charge atteint un niveau où des efforts de cisaillement admissibles du dispositif de cisaillement (42) sont dépassés et une destruction du dispositif de cisaillement (42) est provoquée.

13. Ensemble (1) selon l'une quelconque des revendications précédentes, comprenant un dispositif de siège (21), dans lequel le dispositif de maintien (4) est relié au dispositif de siège (21), et dans lequel le dispositif de fixation (3) peut être relié à la carrosserie (51) d'un moyen de transport (50).

14. Ensemble (1) selon la revendication précédente, dans lequel le dispositif de siège (21) est fixé via deux unités dont au moins une unité comprend ledit absorbeur d'énergie (2).
